# EUROPEAN PATENT APPLICATION

(11) **EP 4 657 467 A1**
(43) Date of publication of application: **03.12.2025**
(21) Application number: 23918532.5
(22) Date of filing: 13.11.2023
(51) Int. Cl.: H01B 13/00, C01B 25/14, H01M 10/052, H01M 10/0562

(54) **METHOD FOR PRODUCING SULFIDE SOLID ELECTROLYTE POWDER AND APPARATUS FOR PRODUCING SULFIDE SOLID ELECTROLYTE POWDER**

(30) Priority: 27.01.2023 JP 2023011197
(71) Applicant: AGC INC., Chiyoda-ku, Tokyo 1008405 (JP)
(72) Inventor: FUJII, Naoki, Tokyo 100-8405 (JP); OMORI, Norifumi, Tokyo 100-8405 (JP)
(74) Representative: Müller-Boré & Partner Patentanwälte PartG mbB
(86) International application number: PCT/JP2023/040836
(87) International publication number: WO 2024/157577

(57) **Abstract**

Disclosed is a method for producing a sulfide solid electrolyte powder, the method comprising: a step of obtaining a starting material mixture by mixing staring materials; a step of synthesizing at least one of a sulfide powder or a sulfide precursor powder from the starting material mixture; a step of obtaining a sulfide solid electrolyte powder by heating the above-described powder in a heating area; a step of transferring the sulfide solid electrolyte powder to a cooling area; and a step of cooling the sulfide solid electrolyte powder in the cooling area, while flowing an inert gas therethrough. With this method for producing a sulfide solid electrolyte powder, the heating area and the cooling area are separated from each other.

## Description

### TECHNICAL FIELD

The present invention relates to a method for producing a sulfide solid electrolyte powder and an apparatus for producing a sulfide solid electrolyte powder.

### BACKGROUND ART

Lithium-ion secondary batteries are widely used for a portable electronic device such as a mobile phone and a notebook computer. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide solid electrolyte.

Examples of a method for synthesizing the sulfide solid electrolyte mainly include a solid phase method and a melting method.

In the solid phase method, first, raw materials of a sulfide solid electrolyte are mixed and pulverized by mechanical milling or the like as necessary to obtain a sulfide precursor powder. The sulfide precursor powder is heated and fired to obtain a sulfide solid electrolyte powder.

In the melting method, first, a mixture of raw materials of the sulfide solid electrolyte is heated and melted to prepare a melt. The melt is cooled and solidified, and then pulverized as necessary to obtain a sulfide solid electrolyte powder.

When the synthesized sulfide solid electrolyte powder is applied to the lithium-ion secondary battery, the sulfide solid electrolyte powder is used in a form of a fine powder having a particle diameter of several µm or less. Therefore, the sulfide solid electrolyte powder is further finely pulverized.

As an example of the sulfide solid electrolyte, Patent Literature 1 discloses an argyrodite sulfide solid electrolyte. The sulfide solid electrolyte has a cubic structure belonging to a space group F-43m, and contains a compound represented by a composition formula: Li₇₋ₓPS_{6-X}Ha_{X} (where Ha represents Cl or Br) (where x = 0.2 to 1.8), and a lightness L value of an L* a* b* color system is 60.0 or more. This is intended to improve charge and discharge efficiency and cycle characteristics by increasing lithium ion conductivity and decreasing electron conductivity.

### CITATION LIST

### PATENT LITERATURE

Patent Literature 1: WO2015/012042

### SUMMARY OF INVENTION

### TECHNICAL PROBLEM

A purpose of heating the sulfide precursor powder when synthesizing the sulfide solid electrolyte by the solid phase method is to obtain the sulfide solid electrolyte powder by firing the sulfide precursor powder as described above, as well as to stabilize a crystal structure of the obtained sulfide solid electrolyte powder and to remove impurities such as sulfur attached to a particle surface. Even when the sulfide solid electrolyte is synthesized by the melting method, it is preferable to heat an obtained sulfide powder. By subjecting the sulfide powder to a heat treatment, a crystal structure of the sulfide solid electrolyte can be stabilized, and the impurities such as sulfur attached to the particle surface can be removed.

However, in both the solid phase method and the melting method, a cooling treatment is performed after the heat treatment, but when the cooling treatment is performed, the impurities such as sulfur desorbed by the heat treatment may adhere to the particle surface again and act as a binder connecting the particles, and thus the particles are aggregated. When the particles are aggregated as described above, there is a problem that a load of pulverization becomes excessive in the subsequent pulverization step, and battery performance of the solid electrolyte becomes insufficient.

Therefore, an object of the present invention is to provide a method and an apparatus for producing a sulfide solid electrolyte powder capable of reducing a load of subsequent pulverization by preventing aggregation of particles in a heat treatment for stabilizing a crystal structure of a sulfide solid electrolyte and removing impurities such as sulfur attached to a particle surface and a subsequent cooling treatment.

### SOLUTION TO PROBLEM

As a result of intensive studies, the present inventors have found that the above problems can be solved by separating a heating area and a cooling area from each other when heat-treating at least one powder of a sulfide powder and a sulfide precursor powder synthesized from a raw material mixture, and cooling the powder while circulating an inert gas in the cooling area, and have completed the present invention.

That is, the present invention relates to the following [1] to [8].
[1] A method for producing a sulfide solid electrolyte powder, the method including:
   mixing raw materials to obtain a raw material mixture;
   synthesizing at least one powder of a sulfide powder and a sulfide precursor powder from the raw material mixture;
   heat-treating the powder in a heating area to obtain a sulfide solid electrolyte powder;
   transferring the sulfide solid electrolyte powder to a cooling area; and
   cooling the sulfide solid electrolyte powder while circulating an inert gas in the cooling area,
   in which the heating area and the cooling area are separated.
[2] The method for producing a sulfide solid electrolyte powder according to [1], in which in the cooling treatment, an average cooling rate for a temperature of the sulfide solid electrolyte powder to drop from 350°C to 100°C is 5°C/min or more.
[3] The method for producing a sulfide solid electrolyte powder according to [1] or [2], in which in the cooling treatment, the inert gas in an amount 50 times or more a volume of the sulfide solid electrolyte powder is circulated through the cooling area until the temperature of the sulfide solid electrolyte powder drops to 100°C.
[4] The method for producing a sulfide solid electrolyte powder according to [1] or [2], in which in the cooling treatment, the inert gas in an amount 200 times or more a volume of the sulfide solid electrolyte powder is circulated through the cooling area until the temperature of the sulfide solid electrolyte powder drops to 100°C.
[5] The method for producing a sulfide solid electrolyte powder according to [1] or [2], in which in the heat treatment, the powder is heated while an inert gas is circulated in the heating area.
[6] The method for producing a sulfide solid electrolyte powder according to [1] or [2], in which the heat treatment, the transfer to the cooling area, and the cooling treatment are continuously performed.
[7] An apparatus for producing a sulfide solid electrolyte powder, the apparatus including:
   a heating portion configured to heat at least one powder of a sulfide powder and a sulfide precursor powder synthesized from a raw material mixture obtained by mixing raw materials;
   a cooling portion configured to cool a sulfide solid electrolyte powder obtained by heat-treating the powder in the heating portion; and
   an inert gas circulation portion configured to circulate an inert gas through the cooling portion,
   in which the heating portion and the cooling portion are provided separately.
[8] The apparatus for producing a sulfide solid electrolyte powder according to [7], in which the heating portion is provided with an inert gas circulation portion for circulating an inert gas.

### ADVANTAGEOUS EFFECTS OF INVENTION

According to a production method and a production apparatus of the embodiment of the present invention, a sulfide solid electrolyte powder in which aggregation of particles is prevented is obtained. Since the aggregation of the particles is prevented, a load of subsequent pulverization can be reduced, and thus a sulfide solid electrolyte powder having excellent battery performance is obtained even after the pulverization step.

### BRIEF DESCRIPTION OF DRAWINGS

FIG. 1 is a flowchart of a method for producing a sulfide solid electrolyte powder according to an embodiment of the present invention.
FIG. 2 is a flowchart of a method for producing a sulfide solid electrolyte powder by a solid phase method.
FIG. 3 is a flowchart of a method for producing a sulfide solid electrolyte powder by a melting method.
FIG. 4 is an example of a schematic diagram of the method for producing a sulfide solid electrolyte powder according to the embodiment of the present invention.
FIG. 5 is an example of a schematic diagram of the method for producing a sulfide solid electrolyte powder according to the embodiment of the present invention.
FIG. 6 is an example of a schematic diagram of an apparatus for producing a sulfide solid electrolyte powder according to the embodiment of the present invention.

### DESCRIPTION OF EMBODIMENTS

Hereinafter, the present invention is described in detail, but the present invention is not limited to the following embodiments, and can be freely modified and implemented without departing from the gist of the present invention. In addition, "to" indicating a numerical range is used to include numerical values written before and after it as a lower limit value and an upper limit value. In the following drawings, members and portions having the same functions may be denoted by the same reference numerals, and duplicate descriptions may be omitted or simplified. Embodiments described in the drawings are schematically for the purpose of clearly illustrating the present invention, and do not necessarily accurately represent a size or a scale of an actual apparatus.

### [Method for Producing Sulfide Solid Electrolyte]

A method for producing a sulfide solid electrolyte powder according to an embodiment of the present invention (hereinafter, also referred to as the present production method) includes: mixing raw materials to obtain a raw material mixture; synthesizing at least one powder (hereinafter, also referred to as the present powder) of a sulfide powder and a sulfide precursor powder from the raw material mixture; heat-treating the powder in a heating area to obtain a sulfide solid electrolyte powder; transferring the sulfide solid electrolyte powder to a cooling area; and cooling the sulfide solid electrolyte powder in the cooling area while an inert gas is circulated, and the heating area and the cooling area are separated from each other.

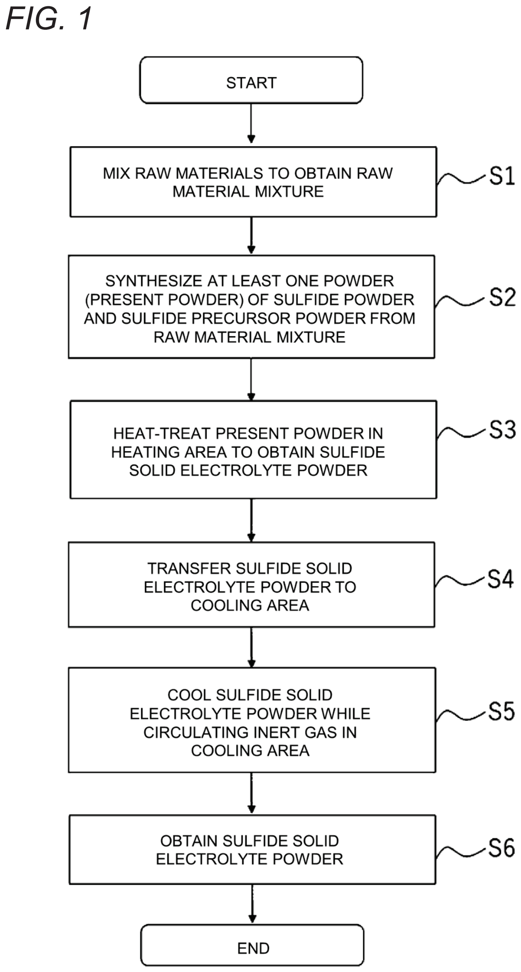

FIG. 1 shows an example of a flowchart of the present production method. In the present production method, first, raw materials are mixed to obtain a raw material mixture (step S1), at least one powder (present powder) of the sulfide powder and the sulfide precursor powder is synthesized from the raw material mixture (step S2), the present powder is heat-treated in the heating area to obtain the sulfide solid electrolyte powder (step S3), the sulfide solid electrolyte powder is transferred to the cooling area (step S4), and the sulfide solid electrolyte powder is cooled while an inert gas is circulated in the cooling area (step S5) to obtain the sulfide solid electrolyte powder (step S6).

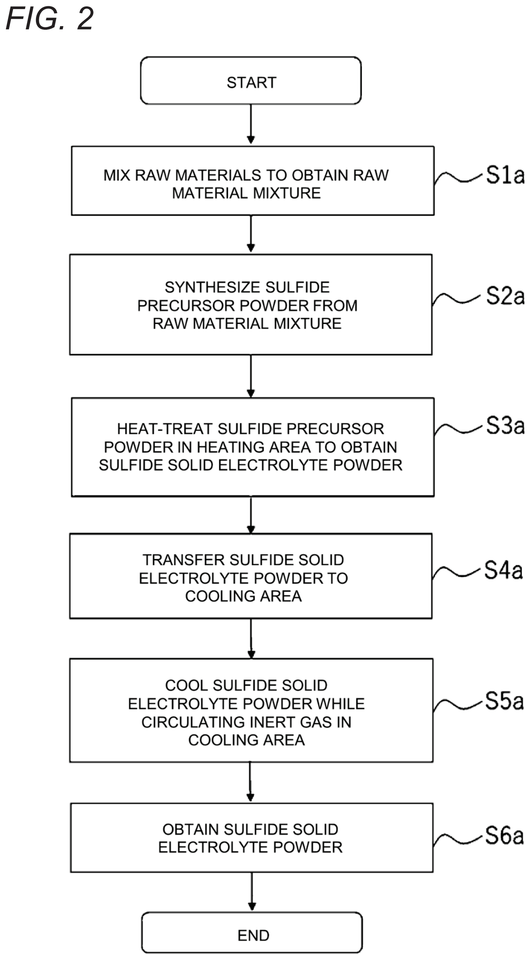

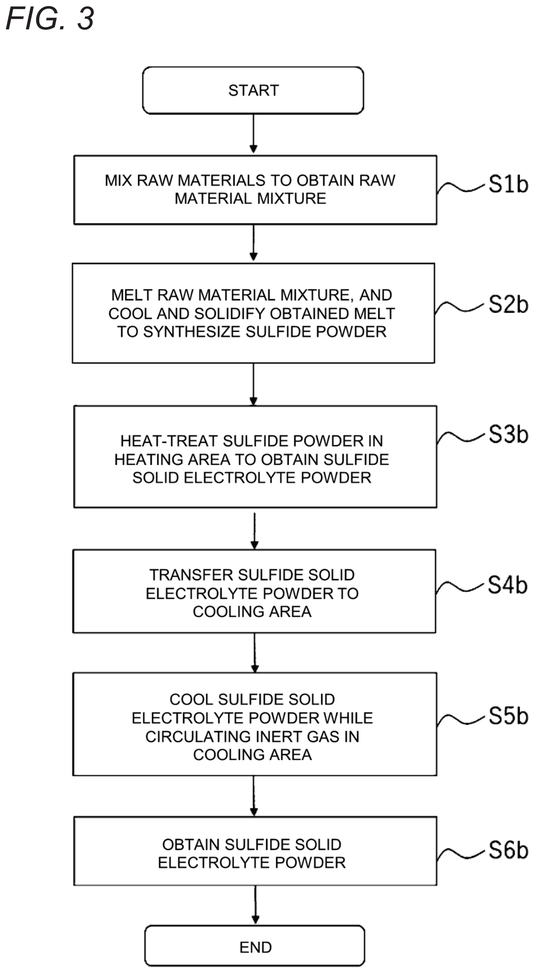

FIG. 2 shows an example of a flowchart of the present production method by the solid phase method, and FIG. 3 shows an example of a flowchart of the present production method by the melting method.

In the solid phase method, as shown in FIG. 2, raw materials are mixed to obtain a raw material mixture (step S1a), a sulfide precursor powder is synthesized from the raw material mixture (step S2a), the sulfide precursor powder is heat-treated in a heating area to obtain a sulfide solid electrolyte powder (step S3a), the sulfide solid electrolyte powder is transferred to a cooling area (step S4a), and the sulfide solid electrolyte powder is cooled while an inert gas is circulated in the cooling area (step S5a) to obtain a sulfide solid electrolyte powder (step S6a). By the heat treatment of step S3a, the sulfide precursor powder is fired to obtain the sulfide solid electrolyte powder, and further, a crystal structure of the sulfide solid electrolyte powder is stabilized, and impurities such as sulfur attached to a particle surface can be removed.

On the other hand, in the melting method, as shown in FIG. 3, raw materials are mixed to obtain a raw material mixture (step S1b), the raw material mixture is melted, an obtained melt is cooled and solidified to synthesize a sulfide powder (step S2b), the sulfide powder is heated in a heating area to obtain a sulfide solid electrolyte powder (step S3b), the sulfide solid electrolyte powder is transferred to a cooling area (step S4b), and the sulfide solid electrolyte powder is cooled while an inert gas is circulated in the cooling area (step S5b) to obtain a sulfide solid electrolyte powder (step S6b). By the heat treatment of step S3b, a crystal structure of the sulfide solid electrolyte powder is stabilized, and impurities such as sulfur attached to the particle surface can be removed.

As is described later, it is preferable that steps S1 to S6, steps S1a to S6a, and steps S1b to S6b are each performed continuously, and an effect of the present invention is further enhanced when this continuous production method is used.

### <Steps S1, S1a, and S1b>

In steps S1, S1a, and S1b, the raw materials are mixed to obtain the raw material mixture.

### (Raw Materials)

Various raw materials can be used as the raw materials in the present production method (hereinafter, also referred to as the present raw materials). As the present raw materials, commercially available sulfide solid electrolyte raw materials may be used, or raw materials produced from predetermined materials may be used. The present raw materials may be further subjected to a known pretreatment.

The present raw material usually contains an alkali metal element (R) and a sulfur element (S).

Examples of the alkali metal element (R) include a lithium element (Li), a sodium element (Na), and a potassium element (K), and among these elements, the lithium element (Li) is preferable. As the alkali metal element (R), substances (components) containing an alkali metal element such as elemental alkali metal element and compounds containing an alkali metal element can be appropriately combined and used. Here, as the lithium element, Li-containing substances (components), such as elemental Li and Li-containing compounds, can be appropriately combined and used.

Examples of a substance containing the lithium element (Li) include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metallic lithium. As the substance containing the lithium element (Li), from the viewpoint of obtaining a sulfide material, it is preferable to use lithium sulfide.

As the sulfur element (S), S-containing substances (components), such as elemental S and S-containing compounds, can be appropriately combined and used.

Examples of a substance containing the sulfur element (S) include phosphorus sulfides such as phosphorus trisulfide (P₂S₃) and phosphorus pentasulfide (P₂S₅), other sulfur compounds containing phosphorus, elemental sulfur, and a compound containing sulfur. Examples of the compound containing sulfur include H₂S, CS₂, iron sulfides (such as FeS, Fe₂S₃, FeS₂, Fe₁₋ₓS), bismuth sulfide (Bi₂S₃), and copper sulfides (such as CuS, Cu₂S, Cu₁₋ₓS). From the viewpoint of obtaining a sulfide material, the substance containing the sulfur element (S) is preferably phosphorus sulfide, and more preferably phosphorus pentasulfide (P₂S₅). These substances may be used alone or in combination of two or more kinds thereof. Phosphorus sulfide can be considered as a compound that serves as both the S-containing substance and a P-containing substance, which is described later.

From the viewpoint of improving ionic conductivity and the like of a target sulfide solid electrolyte, it is preferable that the present raw material further contains a phosphorus element (P). As the phosphorus element (P), P-containing substances (components), such as elemental P and P-containing compounds, can be appropriately combined and used.

Examples of a substance containing the phosphorus element (P) include phosphorus sulfides such as phosphorus trisulfide (P₂S₃) and phosphorus pentasulfide (P₂S₅), phosphorus compounds such as sodium phosphate (Na₃PO₄), and elemental phosphorus. As the substance containing the phosphorus element (P), from the viewpoint of exerting the effect of the present invention more effectively, phosphorus sulfide having high volatility is preferable, and phosphorus pentasulfide (P₂S₅) is more preferable. These substances may be used alone or in combination of two or more kinds thereof.

On the other hand, since lithium sulfide is expensive, a lithium compound other than lithium sulfide, metallic lithium, or the like may be used from the viewpoint of reducing a production cost of the sulfide solid electrolyte. Specifically, in this case, the present raw material preferably contains one or more selected from the group consisting of metallic lithium, lithium iodide (LiI), lithium carbonate (Li₂CO₃), lithium sulfate (Li₂SO₄), lithium oxide (Li₂O), and lithium hydroxide (LiOH) as the Li-containing substance. These substances may be used alone or in combination of two or more kinds thereof.

The present raw material may contain further substances (compounds and the like) in addition to the above substances depending on the composition of the target sulfide solid electrolyte or as additives or the like.

For example, when producing a sulfide solid electrolyte containing a halogen element such as F, Cl, Br or I, the present raw material preferably contains a halogen element (Ha). In this case, the present raw material preferably contains a compound containing a halogen element. Examples of the compound containing the halogen element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. As the compound containing a halogen element, lithium halides are preferable, and LiCl, LiBr, and LiI are more preferable, from the viewpoint of reactivity of the raw material. These compounds may be used alone or in combination of two or more kinds thereof.

An alkali metal halide such as lithium halide is also a compound containing an alkali metal element such as Li. When the present raw material contains an alkali metal halide, a part or all of the alkali metal element such as Li in the present raw material may be derived from the alkali metal halide such as lithium halide.

When the present raw material contains the halogen element (Ha) and the phosphorus element (P), a molar equivalent of Ha relative to P in the present raw material is preferably 0.2 molar equivalents or more, and more preferably 0.5 molar equivalents or more, from the viewpoint of improving the ionic conductivity and the like of the target sulfide solid electrolyte. The molar equivalent of Ha is preferably 4 molar equivalents or less, and more preferably 3 molar equivalents or less, from the viewpoint of stability of the target sulfide solid electrolyte.

When the target sulfide solid electrolyte powder is amorphous, the present raw material preferably contains a sulfide such as SiS₂, B₂S₃, GeS₂, and Al₂S₃ from the viewpoint of improving the ease of generation of an amorphous phase. By facilitating the generation of the amorphous phase, when the amorphous substance is obtained by rapid cooling, the amorphous sulfide solid electrolyte powder can be obtained even when a cooling rate is reduced, thereby reducing a load on an apparatus.

From the viewpoint of imparting moisture resistance to the target sulfide solid electrolyte powder, it is also preferable that oxides such as SiO₂, B₂O₃, GeO₂, Al₂O₃, P₂O₅ are contained. These compounds may be used alone or in combination of two or more kinds thereof.

An addition amount of the sulfides or oxides is preferably 0.1% by mass or more, and more preferably 0.5% by mass or more with respect to a total amount of the raw material. The addition amount of the sulfides or oxides is preferably 50% by mass or less, and more preferably 40% by mass or less.

On the other hand, when the target sulfide solid electrolyte powder includes a crystal layer, the present raw material may include a compound serving as a crystal nucleus such as an oxide, an oxynitride, a nitride, a carbide, another chalcogen compound, or a halide.

### (Mixing)

In the present production method, the present raw materials are mixed according to the composition of the target sulfide solid electrolyte to obtain the raw material mixture (hereinafter, also referred to as the present raw material mixture). The mixing in step S1 means a mixing state in which a plurality of raw materials are put in one container or the raw materials placed in the container are mixed by a mortar, a stirring blade, or the like before being subjected to step S2 to be described later.

A mixing ratio is not particularly limited, but it is preferably obtained by mixing at a predetermined stoichiometric mixture ratio according to the substances used for mixing. For example, a molar ratio S/R of the sulfur element (S) to the alkali metal element (R) in the present raw material is preferably 0.65/0.35 or less, and more preferably 0.5/0.5 or less, from the viewpoint of improving the ionic conductivity and the like of the target sulfide solid electrolyte. A mixing method is not particularly limited, and examples thereof include mixing in a mortar, mixing using a medium such as a planetary ball mill, and medium-less mixing such as a pin mill, a powder stirrer, and air flow mixing.

The present raw materials are mixed, and examples of a preferred combination of the alkali metal element and the sulfur element contained in a target raw material mixture include a combination of Li₂S and P₂S₅. When Li₂S and P₂S₅ are combined, a molar ratio Li/P of Li to P is preferably from 40/60 or more, and more preferably from 50/50 or more. The molar ratio Li/P of Li to P, is preferably 88/12 or less. The molar ratio Li/P of Li to P is preferably from 40/60 to 88/12, and more preferably from 50/50 to 88/12. By adjusting the mixing ratio so that the amount of P₂S₅ is relatively smaller than Li₂S, it becomes easier to prevent volatilization of sulfur and phosphorus components during a heat treatment due to a smaller boiling point of P₂S₅ compared to a melting point of Li₂S.

### (Pulverizing)

The present raw material mixture may be further pulverized after being obtained by mixing the present raw materials. A pulverization method is not particularly limited, and for example, may be performed by mechanical milling. The mechanical milling is not particularly limited as long as the mechanical milling is a method of mixing the present raw materials while applying mechanical energy, and examples thereof include a planetary mill, a ball mill, a vibration mill, a turbo mill, mechano-fusion, and a disk mill. For example, when a planetary ball mill is used, the present raw materials and pulverization balls are added to a container, and the treatment is performed at a predetermined rotation speed for a predetermined time. In general, a production rate of the present precursor increases as the rotation speed increases, and a conversion rate from the present raw material to the present precursor increases as the treatment time increases. A rotation speed of a plate of the planetary ball mill is preferably, for example, 200 rpm or more and 500 rpm or less. The treatment time in the planetary ball mill is, for example, 1 hour or more and 100 hours or less, and preferably 1 hour or more and 50 hours or less.

A material and a size of each of the container and the pulverization balls used in the ball mill are not particularly limited, and known ones in the related art can be used. Examples of the material include alumina, zirconia, glass, and silicon nitride. A diameter of the pulverization balls is, for example, 0.3 mm or more and 20 mm or less.

The mechanical milling may be dry mechanical milling or wet mechanical milling. A liquid used in the wet mechanical milling preferably has a property of not generating hydrogen sulfide in a reaction with the present raw material. After the mechanical milling, the obtained present precursor is preferably dried. A drying method is not particularly limited, and examples thereof include a method using an external heat type drying furnace or a hot air circulation type drying furnace.

### <Steps S2, S2a, and S2b>

In step S2, at least one powder of the sulfide powder and the sulfide precursor powder is synthesized from the present raw material mixture.

In particular, in the solid phase method, the sulfide precursor powder is synthesized from the present raw material mixture (step S2a), and in the melting method, the sulfide powder is synthesized from the present raw material mixture (step S2b).

### (Sulfide Powder)

In the melting method, the sulfide powder is synthesized from the present raw material mixture (step S2b). That is, the sulfide powder described below is a powder obtained by cooling and solidifying the present raw material mixture after melting. The sulfide powder is the sulfide solid electrolyte powder obtained after the melting and the cooling in the melting method, and means a state before performing the heat treatment described later.

In the melting method, first, the present raw material mixture is heated to a temperature at which the present raw material melts to obtain a melt, and the obtained melt is cooled and solidified to obtain the sulfide powder. It is more preferable to obtain the sulfide powder by performing a pulverization step after cooling and solidifying the melt.

### - Melting of Raw Material Mixture

The present raw material mixture is preferably melted in a gas atmosphere containing a sulfur element. The present raw material mixture is heated and melted in the gas atmosphere containing the sulfur element, whereby sulfur is introduced into the melt. Accordingly, since the volatilization of sulfur during the heating can be prevented, a composition of the obtained sulfide solid electrolyte powder can be appropriately controlled. The gas containing the sulfur element is, for example, a gas containing a compound containing the sulfur element or elemental sulfur, such as a sulfur gas, a hydrogen sulfide gas, and a carbon disulfide gas.

A temperature for heating and melting is not particularly limited, but from the viewpoint of homogenizing the melt in a short time, the temperature is preferably 600°C or higher, more preferably 630°C or higher, and still more preferably 650°C or higher. The temperature for heating and melting is preferably 1,000°C or lower, more preferably 950°C or lower, still more preferably lower than 900°C, and particularly preferably lower than 800°C, from the viewpoint of preventing deterioration or decomposition due to heating of the components in the melt. The temperature is preferably 600°C or higher and lower than 900°C.

A time for heating and melting the raw material to obtain the melt is not particularly limited, but may be, for example, 0.5 hours or more, 1 hour or more, or 2 hours or more. As long as the deterioration and decomposition of the components in the melt caused by the heating is tolerable, the time for heating and melting may be long. As a practical range, the time is preferably 100 hours or less, more preferably 50 hours or less, and still more preferably 25 hours or less.

A pressure during the heating and melting is not particularly limited, but for example, a normal pressure or a slight pressure is preferred, and normal pressure is more preferred.

From the viewpoint of preventing side reactions with water vapor, oxygen, and the like during the heating and melting, a dew point in a furnace is preferably -20°C or lower. A lower limit is not particularly limited, and is generally -80°C or higher. An oxygen concentration is preferably 1,000 ppm by volume or less.

### - Cooling of Melt

Subsequently, the obtained melt is cooled and solidified to obtain the sulfide powder.

The cooling may be performed by a known method, and the method is not particularly limited. More specific examples of the cooling method include a method in which the melt is poured onto a plate-like body made of carbon or the like and then cooled, a method in which the melt is poured into a narrow gap to be formed into a thin shape, such as a twin roll process, and a method in which the melt is sprayed and cooled in air.

When the melt is poured onto a plate-like body and then cooled, it is preferable that a thickness of the melt after being poured and a thickness of the resulting solid are relatively thin, from the viewpoint of improving the cooling efficiency. Specifically, the thickness is preferably 10 mm or less, and more preferably 5 mm or less. A lower limit of the thickness is not particularly limited, but may be 0.01 mm or more, or may be 0.02 mm or more.

When the melt is poured into a narrow gap to be formed into a thin shape, the cooling efficiency is excellent, and a solid in a flake form, fiber form, or powder form can be obtained. The obtained solid can be obtained in any shape by being crushed into pieces of a size that is easy to handle. Among these shapes, a solid in a shape of a block is preferred since it is easier to recover. The "block" also includes a plate-like, flake-like, and fiber-like shapes.

The cooling and solidification of the melt and the powderization can be performed at the same time. That is, the obtained melt is made into droplets when discharged from the furnace and cooled and solidified to obtain the sulfide powder.

The cooling rate is preferably 0.01°C/sec or more, more preferably 0.05°C/sec or more, and still more preferably 0.1°C/sec or more, from the viewpoint of maintaining the composition obtained by the heating and melting. An upper limit value of the cooling rate is not particularly determined, and a cooling rate of a twin roll process in which a rapid cooling rate is generally said to be high, is 10⁷°C/sec or less.

Here, in the case where the obtained solid is desired to be an amorphous sulfide solid electrolyte, it is preferable to obtain a solid by rapidly cooling the melt obtained by the heating and melting. Specifically, the cooling rate in the case of rapid cooling is preferably 10°C/sec or more, more preferably 100°C/sec or more, still more preferably 500°C/sec or more, and even more preferably 700°C/sec or more. An upper limit value of the cooling rate is not particularly limited, and a cooling rate of a twin roll process in which a rapid cooling rate is generally said to be high, is 10⁷°C/sec or less.

On the other hand, it is also possible to obtain a sulfide powder having a specific crystal structure or a sulfide powder constituted by a crystal phase and an amorphous phase by performing slow cooling during the cooling to crystallize at least a part of the solid. The cooling rate in the case of the slow cooling is preferably 0.01°C/sec or more, and more preferably 0.05°C/sec or more. Further, the cooling rate is preferably 500°C/sec or less, and more preferably 450°C/sec or less. The cooling rate may be less than 10°C/sec, or may be 5°C/sec or less. The cooling rate may be appropriately adjusted according to crystallization conditions.

### - Pulverizing

It is more preferable to obtain the sulfide powder by performing pulverization after cooling and solidifying the melt. A pulverization method is not particularly limited, and for example, may be performed by the mechanical milling described above.

For the subsequent step S3b, an average particle diameter of the sulfide powder obtained in step S2b is preferably 1 µm to 300 µm, more preferably 3 µm to 150 µm, and still more preferably 5 µm to 100 µm. Here, from the viewpoint of preventing scattering during the heat treatment to be described later, the average particle diameter after the pulverization is preferably 1 µm or more, more preferably 3 µm or more, and still more preferably 5 µm or more. The average particle diameter after the pulverization is preferably 300 µm or less, more preferably 150 µm or less, and still more preferably 100 µm or less from the viewpoint of more easily exhibiting an effect of the subsequent heat treatment and easily being subjected to the subsequent fine pulverization.

By the above steps, the sulfide powder before the heat treatment to be described later is obtained. Since the sulfide powder has not been subjected to the heat treatment, the sulfide powder may be in a state in which the crystal structure is not stabilized and the impurities such as sulfur may be attached to the particle surface.

The sulfide powder obtained here may be the same kind of sulfide solid electrolyte as the sulfide solid electrolyte powder finally obtained as described later.

### (Sulfide Precursor Powder)

In the solid phase method, the sulfide precursor powder is synthesized from the present raw material mixture (step S2a). That is, the sulfide precursor powder to be described below is a sulfide solid electrolyte powder synthesized from the present raw material mixture by the solid phase method, and means a powder in a state before performing the heat treatment to be described later. Unlike a powder of a compound containing crystals that functions as the solid electrolyte, such as a sulfide powder obtained by the melting method, the sulfide precursor powder means a powder of a mixture in which a plurality of raw materials are mixed very homogeneously, a powder in which a chemical bonding state has been changed from that of starting materials through a reaction, or a powder of an amorphous compound.

The sulfide precursor powder can be synthesized by, for example, mechanical milling of the present raw material mixture. Specifically, a chemical reaction occurs by the mechanical milling or the like of the present raw material mixture, energy is applied as a bonding state of elements changes, and the sulfide precursor powder is synthesized. The mechanical milling is not particularly limited as long as the mechanical milling is a method of mixing the present raw material mixture while applying mechanical energy, and examples thereof include a ball mill such as a planetary ball mill, a vibration mill, a turbo mill, mechano-fusion, and a disk mill.

When the planetary ball mill is used, the rotation speed of the plate is preferably, for example, 100 rpm to 500 rpm, and a treatment time is preferably, for example, 1 hour to 100 hours, and more preferably 1 hour to 50 hours.

The material and the size of each of the container and the pulverization balls used in the planetary ball mill are not particularly limited, and known ones in the related art can be used. Examples of the material include alumina, zirconia, glass, and silicon nitride. A diameter of the pulverization balls is, for example, 0.3 mm to 20 mm.

The mechanical milling may be dry milling or wet milling. When the wet mechanical milling is performed, it is preferable to use a dispersion medium that does not react with each raw material to generate hydrogen sulfide or the like.

When the wet mechanical milling is performed, the sulfide precursor powder is preferably dried before the subsequent step S3. A drying method is not particularly limited, and examples thereof include a method using an external heat type drying furnace or a hot air circulation type drying furnace.

For the subsequent step S3a, an average particle diameter of the sulfide precursor powder obtained in step S2a is preferably 1 µm to 300 µm, more preferably 3 µm to 150 µm, and still more preferably 5 µm to 100 µm. Here, from the viewpoint of preventing scattering during the heat treatment to be described later, the average particle diameter after the pulverization is preferably 1 µm or more, more preferably 3 µm or more, and still more preferably 5 µm or more. The average particle diameter after the pulverization is preferably 300 µm or less, more preferably 150 µm or less, and still more preferably 100 µm or less from the viewpoint of more easily exhibiting an effect of the subsequent heat treatment and easily being subjected to the subsequent fine pulverization.

### <Steps S3, S3a, and S3b>

In steps S3, S3a, and S3b, the present powder is heat-treated in the heating area.

### <Heat Treatment of Present Powder>

The heat treatment of the sulfide precursor powder of the present powder in the solid phase method is usually performed for the purpose of firing a raw material mixture powder as a precursor to obtain the sulfide solid electrolyte powder, and for the purpose of stabilizing the crystal structure of the obtained sulfide solid electrolyte powder and removing the impurities such as sulfur attached to the particle surface.

The heat treatment of the sulfide powder obtained by the melting method is usually performed for the purpose of stabilizing the crystal structure of the sulfide solid electrolyte powder and removing the impurities such as sulfur attached to the particle surface.

In general, when a compound is synthesized and settles into a thermodynamically stable structure, a further reaction does not proceed. In particular, when a synthesis reaction is a reaction between the powders, if a heterogeneous interface is formed, progress of the reaction stops or becomes extremely slow.

On the other hand, in particular, in the melting method, after the sulfide powder is obtained from the raw material mixture and the sulfide powder is pulverized as necessary, heat energy such as a heat treatment is applied again, so that a sulfide solid electrolyte powder in which particles become more homogeneous and a quality is stable can be obtained.

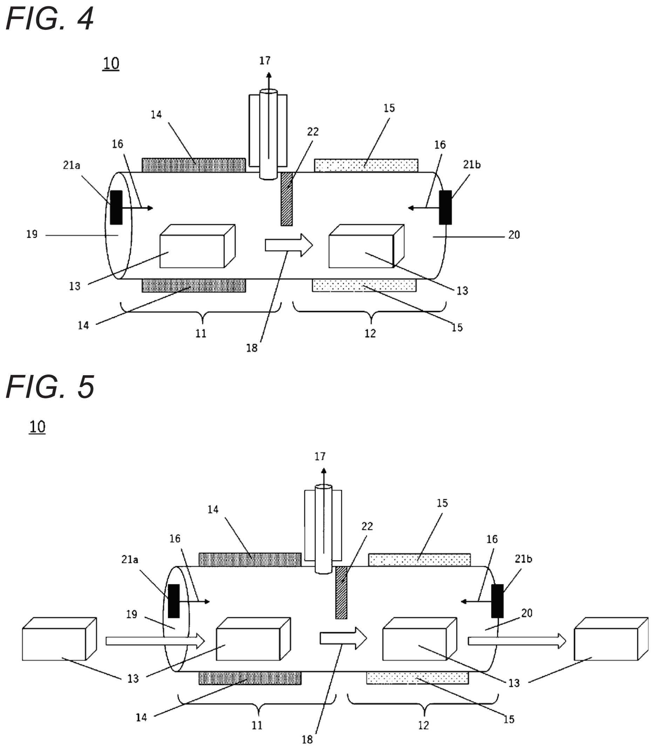

In this step, for example, as shown in FIG. 4, the present powder (not shown) placed in a container 13 is heated in a heating area 11 of an apparatus 10 for producing a sulfide solid electrolyte. Thereby, the sulfide solid electrolyte powder is obtained.

A heating temperature in the heating area 11 varies depending on a composition of the sulfide solid electrolyte, but is preferably, for example, 200°C to 600°C from the viewpoint of homogenizing the crystal structure of the present powder. The temperature is more preferably 350°C or higher, further preferably 380°C or higher, and particularly preferably 400°C or higher. The temperature is more preferably 550°C or lower, and still more preferably 500°C or lower from the viewpoint of preventing deterioration or decomposition of the component in the present powder due to the heating.

A heating time in the heating area 11 varies depending on the composition of the sulfide solid electrolyte, but is preferably, for example, 1 minute to 10 hours from the viewpoint of homogenizing the crystal structure of the present powder. The heating time is more preferably 3 minutes or more, further preferably 5 minutes or more, and particularly preferably 10 minutes or more. The heating time is more preferably 5 hours or less, and still more preferably 3 hours or less from the viewpoint of a production cost.

A heating rate in the heating area 11 is, for example, preferably 1°C/min or more, more preferably 5°C/min or more, and still more preferably 10°C/min or more. An upper limit value of the heating rate is not particularly limited. When the heat treatment is continuously performed as in a mesh belt furnace, a roller hearth kiln furnace, or a rotary kiln furnace, the heating area may have the same temperature at any place.

An inside of the heating area 11 is preferably a uniformly heated area having a small variation in temperature. The variation in temperature in the heating area 11 is preferably -50°C to +50°C, more preferably -30°C to +30°C, and still more preferably -15°C to +15°C.

A heating unit 14 that performs the heating in the heating area 11 can appropriately use a known method in the related art. For example, as shown in FIG. 4, a predetermined heating unit 14 can be provided in the vicinity of the heating area 11 in the apparatus 10 for producing a sulfide solid electrolyte. As the heating unit 14, for example, heaters that heat an object by passing an electric current through a heat generating material such as a kanthal heater, a SiC heater, or a carbon heater, heaters that perform radiation heating such as a halogen heater, high-frequency induction heating devices, and the like can be used as appropriate.

A pressure during the heat treatment of the heating area 11 is not particularly limited, but for example, a normal pressure, a slight pressure, or slight pressure reduction is preferable, and a state of the normal pressure to the slight pressure is more preferable. Here, the slight pressure refers to, for example, a differential pressure from an outside of the furnace of 0.01 kPa to 10 kPa, and the slight pressure reduction refers to, for example, a differential pressure from the outside of the furnace of -10 kPa to -0.01 kPa.

From the viewpoint of preventing the side reactions with the water vapor, the oxygen, and the like during the heat treatment, a dew point of an atmosphere in the heating area 11 is preferably -20°C or lower. The lower limit is not particularly limited, and is generally -80°C or higher. An oxygen concentration is preferably 1,000 ppm by volume or less.

In the heating area 11, it is preferable to heat the present powder while an inert gas 16 is circulated.

Examples of the inert gas include a N₂ gas, an argon gas, and a helium gas.

For example, when the atmosphere in the heating area 11 is replaced with the inert gas atmosphere in advance and the present powder is introduced into the heating area 11, the inert gas 16 is circulated from an inert gas circulation portion 21a provided in the vicinity of an introduction port 19, and an inert gas 17 containing a sulfur gas or the like is exhausted, so that the inert gas atmosphere in the heating area 11 can be maintained, and the sulfur gas or the like generated in the heating area 11 can be removed from the heating area 11. It is preferable that the atmosphere in the heating area 11 does not flow into a cooling area 12 as much as possible.

A flow rate of the inert gas to the heating area 11 is not particularly limited, and is preferably 0.5 L/min or more, more preferably 1 L/min or more, and still more preferably 3 L/min or more per 1 L of a treated powder volume from the viewpoint of discharging the generated sulfur gas. The flow rate of the inert gas to the heating area 11 is preferably 1000 L/min or less, and more preferably 500 L/min or less per 1 L of the treated powder volume in order to reduce wasteful energy loss caused by heat dissipation of the gas.

The container 13 in which the present powder is placed is not particularly limited as long as the container 13 is a heat-resistant container, but a ceramic container made of alumina, zirconia, mullite, or the like is preferable from the viewpoint of preventing contamination. A container made of a material having electron conductivity such as carbon or an anti-corrosion metal can be used in applications where electron conductivity is allowable.

A capacity of the container 13 can be appropriately changed according to an amount treated in the present production method.

A shape of the container 13 is preferably a shape having a low height and a wide bottom. Accordingly, it is possible to prevent the powder from being compacted by own weight and aggregated.

Specifically, the container 13 preferably satisfies a relationship of 2a > b, and more preferably satisfies a relationship of 1.5a > b, a being a long side of a bottom surface and b being a height.

Examples of the case where a bottom surface shape of the container 13 includes a shape other than a rectangular shape include a circle including a perfect circle and an ellipse, and a polygon. When the bottom surface shape is a circle, a long side of the bottom surface means a long side of a square or a rectangle in which the circle is an inscribed circle. When the bottom surface shape is a triangle, a length of the longest side is the long side of the bottom surface. When the bottom surface shape is a polygon having five or more sides, a length of the longest diagonal line is the long side of the bottom surface.

### <Steps S4, S4a, and S4b>

In steps S4, S4a, and S4b, the sulfide solid electrolyte powder obtained by heat-treating the present powder is transferred to the cooling area 12. In this step, for example, as shown in FIG. 4, the present powder heated in the heating area 11 is transferred to the cooling area 12.

A transferring unit 18 that transfers the present powder to the cooling area 12 is not particularly limited, and for example, a transport body such as a heat-resistant belt conveyor may be used, or mesh belt conveying, roller conveying, a conveying method in which a powder moves to a discharge outlet by rotating a surrounding retort such as in a rotary kiln furnace, or a conveying method in which a container is pushed into a furnace and then pushed out of the furnace such as in a pusher furnace may be used. In FIG. 4, the heating area and the cooling area are adjacent to each other in a left-right direction, but for example, when the heating area and the cooling area are adjacent to each other in an up-down direction, the present powder can be moved up and down in the up-down direction.

### <Steps S5, S5a, and S5b>

In steps S5, S5a, and S5b, in the cooling area 12, the sulfide solid electrolyte powder obtained by heat-treating the present powder is cooled while the inert gas 16 is circulated. In this step, for example, as shown in FIG. 4, the sulfide solid electrolyte powder is cooled while the inert gas 16 is circulated in the cooling area 12.

A cooling time in the cooling area 12 is preferably short from the viewpoint of productivity, but is preferably 1 minute to 240 minutes because the container may be damaged by a heat shock if the cooling time is too short. The cooling time is more preferably 5 minutes or more, still more preferably 10 minutes or more, and particularly preferably 15 minutes or more. The cooling time is preferably 180 minutes or less, more preferably 150 minutes or less, and particularly preferably 120 minutes or less, from the viewpoint of the productivity.

In the cooling area 12, an average cooling rate of the sulfide solid electrolyte powder is, for example, preferably 5°C/min or more, more preferably 10°C/min or more, and still more preferably 20°C/min or more. An upper limit value of the average cooling rate is not particularly limited, but is, for example, 1000°C/min or less. For example, when the cooling is performed while a cooling rate of the cooling area 12 and a cooling rate of the sulfide solid electrolyte powder follow each other, the average cooling rate of the sulfide solid electrolyte powder can be regarded as an average cooling rate of the cooling area.

A cooling treatment of the sulfide solid electrolyte powder may be performed over a plurality of areas. In this case, the sulfide solid electrolyte powder may be cooled such that a temperature decreases stepwise in the cooling areas. In this case, the average cooling rate of the sulfide solid electrolyte powder can be defined as C/T (°C/min), in which T (min) is a time from entering the first cooling area to leaving the last cooling area, and C (°C) is a cooling temperature (lowered temperature) from entering the first cooling area to leaving the last cooling area.

In the present production method, the average cooling rate for a temperature of the sulfide solid electrolyte powder to drop from 350°C to 100°C is preferably 5°C/min or more. When a temperature of the cooling area 12 exceeds 350°C, even if sulfur is desorbed from the sulfide solid electrolyte powder, sulfur is immediately evaporated and the sulfur gas is less likely to remain in the vicinity of particles, and thus the average cooling rate is not particularly limited. However, when the temperature of the cooling area 12 is 350°C or lower, the sulfur gas desorbed from the sulfide solid electrolyte powder is likely to stay in the vicinity of the particles, and sulfur adheres to the particle surface again and acts as a binder connecting the particles, so that the particles are likely to aggregate. Therefore, when the time during which the temperature of the cooling area 12 is 350°C or lower is as short as possible, the aggregation of the particles can be prevented.

The average cooling rate for the temperature of the sulfide solid electrolyte powder to drop from 350°C to 100°C is more preferably 10°C/min or more, still more preferably 20°C/min or more, and particularly preferably 25°C/min or more. When the temperature of the sulfide solid electrolyte powder at the time of leaving the heating area is 350°C or lower, the average cooling rate for the temperature to drop from 350°C to 100°C can be defined as the average cooling rate until the temperature of the sulfide solid electrolyte powder at the time of leaving the heating area drops to 100°C.

A cooling unit 15 that performs cooling in the cooling area 12 can appropriately use a known method in the related art. For example, as shown in FIG. 4, a predetermined cooling unit 15 can be provided in the vicinity of the cooling area in the production apparatus 10. As the cooling unit 15, a heater may be used for slow cooling, a low-temperature gas may be purged for cooling, or a cooler may be used for rapid cooling. As the heater, for example, heaters that heat an object by passing an electric current through a heat generating material such as a kanthal heater, a SiC heater, or a carbon heater, heaters that perform radiation heating such as a halogen heater, high-frequency induction heating devices, and the like can be used as appropriate. As the cooler, for example, a water-cooled plate, a water-cooled tube, or the like can be appropriately used.

A pressure during the heat treatment of the cooling area 12 is not particularly limited, but for example, a normal pressure, a slight pressure, or slight pressure reduction is preferable, and a condition of the normal pressure to the slight pressure is more preferable. The slight pressure and the slight pressure reduction are as described above.

From the viewpoint of preventing the side reactions with the water vapor, the oxygen, and the like during the cooling, a dew point of an atmosphere in the cooling area 12 is preferably -20°C or lower. The lower limit is not particularly limited, and is generally -80°C or higher. An oxygen concentration is preferably 1,000 ppm by volume or less.

In the cooling area 12, the sulfide solid electrolyte powder is cooled while the inert gas 16 is circulated.

Examples of the inert gas 16 include a N₂ gas, an argon gas, and a helium gas.

For example, when the atmosphere in the cooling area 12 is replaced with the inert gas atmosphere in advance and the sulfide solid electrolyte powder is transferred to the cooling area 12, the inert gas 16 is circulated from an inert gas circulation portion 21b provided in the vicinity of a take-out port 20, and the inert gas 17 containing the sulfur gas or the like is exhausted through the heating area, so that the inert gas atmosphere in the cooling area 12 can be maintained, and the sulfur gas or the like generated in the cooling area 12 can be removed from the cooling area 12. Although FIG. 4 is an apparatus diagram as an example, a position of the inert gas circulation portion 21b is not limited to the position illustrated in FIG. 4, and may be disposed anywhere in the cooling area 12. The inert gas exhaust portion may also be provided in the cooling area 12.

A flow rate of the inert gas 16 to the cooling area 12 is not particularly limited, but is preferably 0.5 L/min or more, more preferably 1 L/min or more, and still more preferably 3 L/min or more per 1 L of the treated powder volume, from the viewpoint of sending out a small amount of generated sulfur gas and from the viewpoint of preventing a gas inflow from the heating area 11. An upper limit of the flow rate is not particularly limited as long as a target temperature of a facility can be achieved, but is, for example, preferably 1000 L/min or less, and more preferably 500 L/min or less per 1 L of the treated powder volume.

In the present production method, it is preferable to circulate the inert gas 16 in an amount 50 times or more the volume of the sulfide solid electrolyte powder through the cooling area 12 until the temperature of the sulfide solid electrolyte powder drops to 200°C. When the temperature of the sulfide solid electrolyte powder is 200°C or lower, a rate at which sulfur is desorbed from the sulfide solid electrolyte powder is small, but when the temperature of the sulfide solid electrolyte powder exceeds 200°C, a rate at which sulfur is desorbed from the sulfide solid electrolyte powder is large, and therefore, an inside of the cooling area 12 is filled with the sulfur gas, making it easier for sulfur to adhere to the particle surfaces again. Therefore, it is preferable to circulate the inert gas 16 through the cooling area 12 as much as possible to remove the sulfur gas from the cooling area 12 until the temperature of the sulfide solid electrolyte powder drops to 200°C.

A volume of the inert gas 16 circulated through the cooling area 12 until the temperature of the sulfide solid electrolyte powder drops to 200°C is more preferably 100 times or more, still more preferably 200 times or more, and particularly preferably 250 times or more the volume of the sulfide solid electrolyte powder.

### <Separation of Heating Area and Cooling Area>

In the present production method, it is important that the heating area 11 and the cooling area 12 are separated. Here, the heating area 11 and the cooling area 12 being separated means that the heating area 11 and the cooling area 12 are separated so that the sulfur gas generated when the present powder is heated in the heating area 11 does not flow into the cooling area 12.

For example, as shown in FIG. 4, the heating area 11 and the cooling area 12 may be physically separated from each other so that the sulfur gas generated in the heating area 11 does not flow into the cooling area 12, for example, the heating area 11 and the cooling area 12 are separated from each other by a partition 22 or the heating area 11 and the cooling area 12 are independent chambers. For example, the heating area 11 and the cooling area 12 may be separated by controlling an air flow and providing an air curtain so that the sulfur gas generated in the heating area 11 does not flow into the cooling area 12. It is preferable to have as small a gap as possible for the partition to prevent an atmosphere from flowing in from an adjacent area. Various parts such as a partition and an air curtain may be combined.

In the present production method, it is preferable to continuously perform the heat treatment of the present powder, the transfer of the obtained sulfide solid electrolyte powder to the cooling area, and the cooling treatment of the sulfide solid electrolyte powder. For example, as shown in FIG. 5, a sample (first sample) of the present powder is heat-treated, the obtained sulfide solid electrolyte powder is transferred to the cooling area 12, and a new sample (second sample) of the present powder is put into the heating area 11, whereby the cooling treatment of the first sample and the heat treatment of the second sample can be simultaneously performed. In this case, the heating area 11 and the cooling area 12 are preferably divided by the partition 22 such as a heat insulating material so that heat of the heating area 11 does not move to the cooling area 12.

After the first sample subjected to the cooling treatment is collected and the second sample subjected to the heat treatment is transferred to the cooling area 12, a new sample (third sample) of the present powder can be further put into the heating area 11. As described above, by continuously performing the heat treatment, the transfer to the cooling area 12, and the cooling treatment on a plurality of samples of the present powder, a large number of sulfide solid electrolyte powders can be produced in a short time.

On the other hand, the heat treatment of the present powder, the transfer of the obtained sulfide solid electrolyte powder to the cooling area 12, and the cooling treatment of the sulfide solid electrolyte powder may be intermittently performed. That is, after the sample (first sample) of the present powder may be subjected to a series of steps of the heat treatment, the transfer to the cooling area 12, and the cooling treatment and the first sample is collected, a new sample (second sample) of the present powder may be put into the heating area 11, and a series of steps of the heat treatment, the transfer to the cooling area 12, and the cooling treatment may be similarly performed.

Furthermore, for example, by connecting a hopper to the cooling area and combining recovery and cooling of the present powder, it is possible to increase productivity in continuous or intermittent production.

### <Steps S6, S6a, and S6b>

Through the above steps, a sulfide solid electrolyte powder having a stable crystal structure and from which the impurities such as sulfur attached to the particle surface are removed is obtained.

### (Pulverization of Sulfide Solid Electrolyte Powder)

The sulfide solid electrolyte powder obtained in the above step may be further pulverized to further reduce a particle size. Even in the case of further pulverization, since the aggregation of the particles is prevented in the sulfide solid electrolyte powder obtained by the present production method, a load of the pulverization step is reduced.

A pulverization method may be, for example, a wet pulverization method. In the case of the wet pulverization method, a type of used solvent is not particularly limited, but since the sulfide solid electrolyte powder has a tendency to react with moisture and deteriorate, it is preferable to use a non-aqueous organic solvent.

A type of the non-aqueous organic solvent is not particularly limited, and examples thereof include a hydrocarbon-based solvent, an organic solvent containing a hydroxy group, an organic solvent containing an ether group, an organic solvent containing a carbonyl group, an organic solvent containing an ester group, an organic solvent containing an amino group, an organic solvent containing a formyl group, an organic solvent containing a carboxy group, an organic solvent containing an amide group, an organic solvent containing a benzene ring, an organic solvent containing a mercapto group, an organic solvent containing a thioether group, an organic solvent containing a thioester group, an organic solvent containing a disulfide group, and a halogenated alkyl.

Examples of the hydrocarbon-based solvent include cyclohexane, heptane, octane, and toluene, and cyclohexane, heptane, and octane are preferred from the viewpoint of a low saturated moisture concentration. From the viewpoint of adjusting the moisture concentration, it is also preferable to use a mixed solvent in which these hydrocarbon-based solvents are mixed with toluene, dibutyl ether, or the like. From the viewpoint of preventing a decrease in lithium ion conductivity due to the sulfide solid electrolyte powder reacting with water during the pulverization of the sulfide solid electrolyte powder, it is preferable that the moisture concentration of the non-aqueous organic solvent is low. The moisture concentration of the non-aqueous organic solvent may be, for example, 170 ppm by mass or less, 150 ppm by mass or less, 120 ppm by mass or less, or 100 ppm by mass or less.

The wet pulverization method may be carried out using a pulverizer, for example, a ball mill such as a planetary ball mill, or a bead mill. In the wet pulverization, in addition to the above-mentioned solvent, an ether compound, an ester compound, or a nitrile compound may be added as an additive (dispersant).

When the solvent or the additive remains in the sulfide solid electrolyte powder obtained through the wet pulverization, a drying step may be carried out. A drying condition may be, for example, a temperature of 100°C or higher and 200°C or lower. A drying time is not particularly limited and may be, for example, 10 minutes or more and 24 hours or less. The drying step may be carried out under a reduced pressure, for example an absolute pressure of 50 kPa or less. The drying step can be carried out using a hot plate, a drying furnace, an electric furnace, or the like.

### (Sulfide Solid Electrolyte Powder)

The sulfide solid electrolyte powder finally obtained by the present production method includes a sulfide solid electrolyte powder containing a lithium element. Examples of the sulfide solid electrolyte include a sulfide solid electrolyte having an LGPS crystal structure such as Li₁₀GeP₂S₁₂, a sulfide solid electrolyte having an argyrodite crystal structure such as Li₆PS₅Cl, Li_{5.4}PS_{4.4}Cl_{1.6}, and Li_{5.4}PS_{4.4}Cl_{0.8}Br_{0.8}, Li-P-S-Ha-based (Ha represents at least one element selected from the halogen elements) crystallized glass; LPS crystallized glass such as Li₇P₃S₁₁, and a sulfide solid electrolyte having a thiolysicon crystal structure.

Depending on the purpose, the sulfide solid electrolyte powder may be a sulfide solid electrolyte having a specific crystal structure, or a sulfide solid electrolyte including a crystal phase and an amorphous phase. The crystal phase is more preferably an argyrodite crystal phase from the viewpoint of lithium ion conductivity.

As a sulfide solid electrolyte powder having excellent lithium ion conductivity, a sulfide solid electrolyte containing elements of Li-P-S-Ha is preferable, and it is more preferable that the sulfide solid electrolyte has a crystal phase. In the halogen element, the halogen element is preferably derived from one or more selected from the group consisting of lithium chloride, lithium bromide, and lithium iodide.

The lithium ion conductivity of the sulfide solid electrolyte powder is preferably 1.0 × 10⁻⁴ S/cm or more, more preferably 5.0 × 10⁻⁴ S/cm or more, still more preferably 1.0 × 10⁻³ S/cm or more, and particularly preferably 5.0 × 10⁻³ S/cm or more from the viewpoint of improving the battery characteristics when used in a lithium-ion secondary battery. The lithium ion conductivity is measured using an AC impedance measuring device (for example, potentiostat/galvanostat VSP, manufactured by Bio-Logic Sciences Instruments) under the following measurement conditions: measurement frequency: 100 Hz to 1 MHz, measurement voltage: 100 mV, measurement temperature: 25°C.

The sulfide solid electrolyte powder can be identified by analyzing the crystal structure by X-ray diffraction (XRD) measurement, and analyzing the elemental composition using various methods such as ICP emission spectrometry, atomic absorption spectrometry, and ion chromatography. For example, P and S can be measured by ICP emission spectrometry, Li can be measured by atomic absorption spectrometry, and Ha can be measured by ion chromatography.

By performing the Raman spectrum measurement, homogeneity of the composition of the sulfide solid electrolyte can be evaluated. Specifically, samples obtained from the obtained sulfide solid electrolyte are subjected to the Raman spectrum measurement at any two or more points. From the viewpoint of improving accuracy of the evaluation, the number of measurement points is preferably 8 or more, and more preferably 10 or more. Preferable conditions for the Raman spectrum measurement when evaluating the homogeneity of the composition of a sulfide solid electrolyte include a spot diameter of 3 µm and the number of 10 of the measurement points. By setting the spot diameter to 3 µm, an analysis area in the Raman spectrum measurement becomes a size suitable for evaluating the homogeneity of the composition of the sulfide solid electrolyte at a micro level.

It is believed that the smaller the variation in the peak wavenumber (peak position) derived from the structure of the sulfide solid electrolyte is, such as PS₄³⁻ in each measurement result, the more homogeneous the composition of the sulfide solid electrolyte is. Alternatively, it is believed that the smaller the variation in the full width at half maximum of the peaks derived from the structure of the sulfide solid electrolyte is, the more homogeneous the composition of the sulfide solid electrolyte is.

It is preferable to confirm peaks derived from a P-S bond as the peaks derived from the structure of the sulfide solid electrolyte although it depends on the composition of the sulfide solid electrolyte powder. A position of the peak derived from the P-S bond varies depending on the composition system, but typically, the position is between 350 cm⁻¹ and 500 cm⁻¹. Hereinafter, in the present specification, the variation in peak position and the variation in full width at half maximum of the peak refer to those confirmed for the most intense peak among the peaks derived from the P-S bond.

The variation in peak position can be evaluated as follows. That is, when a standard deviation of the peak positions for each measurement point obtained by the Raman spectrum measurement is calculated and the variation in peak position is expressed as (peak position average value) ± (standard deviation), a standard deviation value is preferably within 2 cm⁻¹, more preferably within 1 cm⁻¹, and still more preferably within 0.5 cm⁻¹.

Here, the peak position refers to a position of a peak top. For example, when the sulfide solid electrolyte obtained by the present production method was subjected to the Raman spectrum measurement with a spot diameter of 3 µm and 10 measurement points, the standard deviation of the peak positions of the peaks derived from the P-S bond in a range of 350 cm⁻¹ to 500 cm⁻¹ for each measurement point is preferably within 2 cm⁻¹, more preferably within 1 cm⁻¹, and still more preferably within 0.5 cm⁻¹.

The variation in full width at half maximum of the peaks can be evaluated as follows. That is, the standard deviation of the full width at half maximum of the peaks for each measurement point obtained by the Raman spectrum measurement is calculated by determining the full width at half maximum of each peak and then calculating a standard deviation of the values. When the variation in full width at half maximum is expressed as (average value of full width at half maximum of peaks) ± (standard deviation), the standard deviation value is preferably within 2 cm⁻¹, and more preferably within 1.5 cm⁻¹.

The full width at half maximum of the peaks herein refers to a width at which half the peak intensity of the peaks derived from the P-S bond intersects with the peaks derived from the P-S bond when the Raman spectrum is plotted. For example, when the sulfide solid electrolyte obtained by the present production method was subjected to the Raman spectrum measurement with a spot diameter of 3 µm and 10 measurement points, the standard deviation in full width at half maximum of the peaks derived from the P-S bond in a range of 350 cm⁻¹ to 500 cm⁻¹ for each measurement point is preferably within 2 cm⁻¹, and more preferably within 1.5 cm⁻¹.

### (Apparatus for Producing Sulfide Solid electrolyte)

An apparatus for producing a sulfide solid electrolyte powder according to an embodiment of the present invention (hereinafter, also referred to as the present production apparatus) includes: a heating portion that heats at least one powder of a sulfide solid electrolyte precursor powder obtained by mixing sulfide solid electrolyte raw materials and a powder obtained by melting a mixture of the sulfide solid electrolyte raw materials and cooling and solidifying an obtained melt; a cooling portion that cools a sulfide solid electrolyte powder obtained by heat-treating the powder in the heating portion; and an inert gas circulation portion that circulates an inert gas through the cooling portion, and the heating portion and the cooling portion are provided separately.

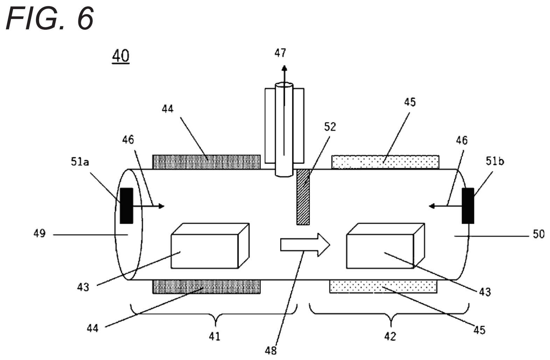

### Hereinafter, the present production apparatus 40 is described with reference to FIG. 6.

### <Heating Portion>

The heating portion 41 in the present production apparatus 40 corresponds to the heating area in the present production method, and has a function of performing the heat treatment of the present powder described above. Regarding the heat treatment of the present powder, the contents described in the present production method can be adopted as it is.

The heating portion 41 may include, as a heating unit 44, for example, heaters that heat an object by passing an electric current through a heat generating material such as a kanthal heater, a SiC heater, or a carbon heater, heaters that perform radiation heating such as a halogen heater, high-frequency induction heating devices, and the like.

The heating portion 41 may be provided with an inert gas circulation portion 51a through which an inert gas 46 to be described later is circulated. The heat treatment can be performed while the inert gas 46 is circulated through the inert gas circulation portion 51a. For the circulation of the inert gas 56 through the heating portion 41, the contents described in the present production method can be adopted as it is.

In FIG. 6, the heating portion 41 is constituted by one area, but the present production apparatus is not limited to this aspect, and the heating portion 41 may be divided into a plurality of areas.

### <Cooling Portion>

The cooling portion 42 in the present production apparatus 40 corresponds to the cooling area in the present production method, and has a function of cooling the sulfide solid electrolyte powder obtained by heating the present powder in the heating portion 41. Regarding the cooling treatment of the sulfide solid electrolyte powder, the contents described in the present production method can be adopted as it is.

The cooling portion 42 may include a cooler as a cooling unit 45, and may include a heater as a slow cooling unit. Examples of the heater include heaters that heat an object by passing an electric current through a heat generating material such as a kanthal heater, a SiC heater, or a carbon heater, heaters that perform radiation heating such as a halogen heater, and high-frequency induction heating devices. As the cooler, for example, a water-cooled plate, a water-cooled tube, or the like may be provided.

In FIG. 6, the cooling portion 42 is constituted by one area, but the present production apparatus is not limited to this aspect, and the cooling portion 42 may be divided into a plurality of areas.

### <Inert Gas Circulation Portion>

In the present production apparatus 40, the inert gas circulation portion 51b that circulates the inert gas 46 through the cooling portion 42 is provided. The cooling treatment can be performed while circulating the inert gas 46 by the inert gas circulation portion 51b. For the circulation of the inert gas 46 through the cooling portion 42, the contents described in the present production method can be adopted as it is. Although FIG. 6 is an apparatus diagram as an example, a position of the inert gas circulation portion 51b is not limited to the position illustrated in FIG. 6, and may be disposed anywhere in the cooling portion 42. The inert gas exhaust portion may also be provided in the cooling portion 42.

### <Separation of Heating Portion and Cooling Portion>

In the present production apparatus 40, the heating portion 41 and the cooling portion 42 are separated. Regarding the separation of the heating portion 41 and the cooling portion 42, the contents described in the present production method can be adopted as it is. That is, the heating portion 41 and the cooling portion 42 may be physically separated from each other so that the sulfur gas generated in the heating portion 41 does not flow into the cooling portion 42, for example, the heating portion 41 and the cooling portion 42 are separated by a partition 52 or the heating portion 41 and the cooling portion 42 are independent chambers. For example, the heating portion 41 and the cooling portion 42 may be separated by controlling an air flow and providing an air curtain so that the sulfur gas generated in the heating portion 41 does not flow into the cooling portion 42. It is preferable to have as small a gap as possible for the partition to prevent an atmosphere from flowing in from an adjacent area. Various parts such as a partition and an air curtain may be combined.

In the present production apparatus 40, the partition 52 such as a heat insulating material may be provided and the heating portion 41 and the cooling portion 42 may be separated so that heat of the heating portion 41 does not move to the cooling portion 42.

The present invention is not limited to the above-described embodiments, and various modifications can be adopted within the scope of the present invention. For example, the present invention is not limited to the above-described embodiments, and may be modified and improved as appropriate. In addition, the material, shape, size, number, arrangement place, and the like of each component in the above-described embodiments are optional as long as the present invention can be achieved, and are not limited.

As described above, the present description discloses the following.
[1] A method for producing a sulfide solid electrolyte powder, the method including:
   mixing raw materials to obtain a raw material mixture;
   synthesizing at least one powder of a sulfide powder and a sulfide precursor powder from the raw material mixture;
   heat-treating the powder in a heating area to obtain a sulfide solid electrolyte powder;
   transferring the sulfide solid electrolyte powder to a cooling area; and
   cooling the sulfide solid electrolyte powder while circulating an inert gas in the cooling area,
   in which the heating area and the cooling area are separated.
[2] The method for producing a sulfide solid electrolyte powder according to [1], in which in the cooling treatment, an average cooling rate for a temperature of the sulfide solid electrolyte powder to drop from 350°C to 100°C is 5°C/min or more.
[3] The method for producing a sulfide solid electrolyte powder according to [1] or [2], in which in the cooling treatment, the inert gas in an amount 50 times or more a volume of the sulfide solid electrolyte powder is circulated through the cooling area until the temperature of the sulfide solid electrolyte powder drops to 100°C.
[4] The method for producing a sulfide solid electrolyte powder according to [1] or [2], in which in the cooling treatment, the inert gas in an amount 200 times or more a volume of the sulfide solid electrolyte powder is circulated through the cooling area until the temperature of the sulfide solid electrolyte powder drops to 100°C.
[5] The method for producing a sulfide solid electrolyte powder according to any one of [1] to [4], in which in the heat treatment, the powder is heated while an inert gas is circulated in the heating area.
[6] The method for producing a sulfide solid electrolyte powder according to any one of [1] to [5], in which the heat treatment, the transfer to the cooling area, and the cooling treatment are continuously performed.
[7] An apparatus for producing a sulfide solid electrolyte powder, the apparatus including:
   a heating portion configured to heat at least one powder of a sulfide powder and a sulfide precursor powder synthesized from a raw material mixture obtained by mixing raw materials;
   a cooling portion configured to cool a sulfide solid electrolyte powder obtained by heat-treating the powder in the heating portion; and
   an inert gas circulation portion configured to circulate an inert gas through the cooling portion,
   in which the heating portion and the cooling portion are provided separately.
[8] The apparatus for producing a sulfide solid electrolyte powder according to [7], in which the heating portion is provided with an inert gas circulation portion for circulating an inert gas.

### EXAMPLES

Hereinafter, the present invention is described in detail with reference to Examples, but the present invention is not limited thereto. Examples 1 to 4 are Inventive Examples, and Example 5 is Comparative Example.

### <Preparation of Sulfide Solid Electrolyte>

### (Example 1)

A sulfide solid electrolyte powder was produced by the following procedure according to the specification of the production apparatus 10 shown in FIG. 4.

First, as the raw materials, powders of Li₂S (purity: 99.98%, manufactured by Sigma), P₂S₅ (purity: 99%, manufactured by Sigma), LiCl (purity: 99.99%, manufactured by Sigma), and LiBr (purity: 99.995%, manufactured by Sigma) were prepared in a molar ratio of 1.9:0.5:0.8:0.8 to obtain a raw material mixture.

The obtained raw material mixture was placed in a heat-resistant container and heated at 750°C for 60 minutes in an atmosphere of a gas containing a sulfur element to obtain a melt obtained by heating and melting the raw material mixture as a synthetic compound. As the gas containing the sulfur element, a sulfur gas (Sx (x = 2 to 8)) and a N₂ gas as a carrier gas were used, and a content of the sulfur gas was set to 10 vol%. Next, the melt was cooled to room temperature at 5°C/sec, pulverized using a mortar, adjusted to have an average particle diameter of 10 µm to 20 µm, and then subjected to 100 µm mesh pass to obtain Li_{5.4}PS_{4.4}Cl_{0.8}Br_{0.8} (present powder) as the present powder (sulfide powder).

Resulting 50 g of the present powder was placed in the container 13 made of alumina and having a capacity of 0.2 L, and was put into the heating area 11 of the production apparatus 1. Thereafter, in the heating area 11, the present powder was heated at 430°C for 15 minutes by an iron-chromium-aluminum alloy kanthal heater as the heating unit 14 while circulating a N₂ gas as the inert gas 16 at 5 L/min from the inert gas circulation portion 21a. A total amount (volume) of the N₂ gas circulated at this time was 75 L.

Subsequently, a sulfide solid electrolyte powder obtained by heat-treating the present powder was transferred to the cooling area 12 by pushing the container 13 with a rod-shaped jig as the transferring unit 18.

In the cooling area 12, the N₂ gas was circulated at 5 L/min while maintaining a temperature thereof at 350°C in advance. After the container 13 was transferred to the cooling area 12, the temperature was maintained for 5 minutes, and the temperature was lowered at a program of 10°C/min while circulating the N₂ gas at 5 L/min to perform cooling. During the cooling, it was found that an average cooling rate was 10°C/min until the temperature of the cooling area 12 dropped from 350°C to 100°C in actual measurement in the vicinity of the sample. That is, the average cooling rate for a temperature of the sulfide solid electrolyte powder to drop from 350°C to 100°C was 10°C/min. A total amount (volume) of the N₂ gas during the cooling was 150 L, which was 6000 times the volume of the sulfide solid electrolyte powder.

In this way, the sulfide solid electrolyte powder in Example 1 was obtained.

### (Example 2)

A sulfide solid electrolyte powder was obtained in the same manner as in Example 1 except that the conditions in the heating step and the cooling step were changed as shown in Table 1. Specifically, in the cooling area 12, the N₂ gas was circulated at room temperature (25°C) at 5 L/min in advance, and the container 13 was transferred to the cooling area 12 and cooled. During the cooling, it was found that the average cooling rate was 30°C/min until the temperature of the cooling area 12 dropped from 350°C to 100°C in actual measurement in the vicinity of the sample. That is, the average cooling rate for a temperature of the sulfide solid electrolyte powder to drop from 350°C to 100°C was 30°C/min. A total amount (volume) of the N₂ gas during the cooling was 50 L, which was 2000 times the volume of the sulfide solid electrolyte powder. In this way, the sulfide solid electrolyte powder in Example 2 was obtained.

### (Example 3)

A sulfide solid electrolyte powder was obtained in the same manner as in Example 1 except that the conditions in the heating step and the cooling step were changed as shown in Table 1. Specifically, in the cooling area 12, the N₂ gas was circulated at 0.5 L/min while maintaining a temperature thereof at 350°C in advance. After the container 13 was transferred to the cooling area 12, the temperature was maintained for 5 minutes, and the temperature was lowered at a program of 5°C/min while circulating at 0.5 L/min. During the cooling, it was found that the average cooling rate was 5°C/min until the temperature of the cooling area 12 dropped from 350°C to 100°C in actual measurement in the vicinity of the sample. That is, the average cooling rate for a temperature of the sulfide solid electrolyte powder to drop from 350°C to 100°C was 5°C/min. A total amount (volume) of the N₂ gas during the cooling was 28 L, which was 1100 times the volume of the sulfide solid electrolyte powder. In this way, the sulfide solid electrolyte powder in Example 3 was obtained.

### (Example 4)

A sulfide solid electrolyte was produced by the following procedure according to the specification of the production apparatus 1 shown in FIG. 4.

First, as the raw materials, powders of Li₂S (purity: 99.98%, manufactured by Sigma), P₂S₅ (purity: 99%, manufactured by Sigma), LiCl (purity: 99.99%, manufactured by Sigma), and LiBr (purity: 99.995%, manufactured by Sigma) were prepared in a molar ratio of 1.9:0.5:0.8:0.8 to obtain a raw material mixture.

The obtained raw material mixture was further mixed using the planetary ball mill (LP-M2 manufactured by ITO SEISAKUSHO CO., LTD.) to obtain a sulfide precursor. The mixing by the planetary ball mill was performed at 400 rpm for 20 hours using a ball having a particle diameter of 10 mm. The obtained sulfide precursor is pulverized using a mortar, adjusted to have an average particle diameter of 10 µm to 20 µm, and then subjected to 100 µm mesh pass to obtain the present powder (sulfide precursor powder).

Thereafter, a sulfide solid electrolyte powder was obtained in the same manner as in Example 1 except that the conditions in the heating step and the cooling step were changed as shown in Table 1. Specifically, in the cooling area 12, the N₂ gas was circulated at room temperature (25°C) at 0.5 L/min in advance, and the container 13 was transferred to the cooling area 12 and cooled. During the cooling, it was found that the average cooling rate was 30°C/min until the temperature of the cooling area 12 dropped from 350°C to 100°C in actual measurement in the vicinity of the sample. That is, the average cooling rate for a temperature of the sulfide solid electrolyte powder to drop from 350°C to 100°C was 30°C/min. A total amount (volume) of the N₂ gas during the cooling was 5 L, which was 200 times the volume of the sulfide solid electrolyte powder. In this way, the sulfide solid electrolyte powder in Example 4 was obtained.

### (Example 5)

A sulfide solid electrolyte in Example 5 was obtained in the same manner as in Example 1 except that a production apparatus in which the heating area and the cooling area were not separated, that is, the heating and the cooling were performed at the same place, and the conditions in the heating step and the cooling step were changed as shown in Table 1.

### <Powder Passage Test>

Resulting 45 g of the sulfide solid electrolyte powder in each of Examples 1 to 5 was subjected to the 100 µm mesh pass using an automatic vibration sieving machine (manufactured by Retsch, electromagnetic sieve shaker AS200 basic). A time for performing the mesh pass was 10 minutes, and a result of a ratio (wt%) of the powder remaining on the mesh is shown in Table 1.

**[Table 1]**

| | Composition of present powder | Melting method/solid phase method | Heating step | | Cooling step | | | | Powder passage test | |
|---|---|---|---|---|---|---|---|---|---|---|
| | | | Heating temperature/time | Circulate N₂ | Circulate N₂ | | | Average cooling rate | Test time | Remaining on mesh |
| | | | | Flow rate | Flow rate | Volume | N₂/sulfide solid electrolyte powder | | | |
| Example 1 | Li_{5.4}PS_{4.4}Cl_{0.8}Br_{0.8} | Melting method | 430°C/15 min | 5 L/min | 5 L/min | 150 L | 6000 times | 10°C/min | 10 minutes | 1 wt% |
| Example 2 | Li_{5.4}PS_{4.4}Cl_{0.8}Br_{0.8} | Melting method | 430°C/15 min | 5 L/min | 5 L/min | 50 L | 2000 times | 30°C/min | 10 minutes | 1 wt% |
| Example 3 | Li_{5.4}PS_{4.4}Cl_{0.8}Br_{0.8} | Melting method | 430°C/15 min | 5 L/min | 0.5 L/min | 28 L | 1100 times | 5°C/min | 10 minutes | 8 wt% |
| Example 4 | Li_{5.4}PS_{4.4}Cl_{0.8}Br_{0.8} | Solid phase method | 430°C/15 min | 5 L/min | 0.5 L/min | 5L | 200 times | 30°C/min | 10 minutes | 1 wt% |
| Example 5 | Li_{5.4}PS_{4.4}Cl_{0.8}Br_{0.8} | Melting method | 430°C/15 min | 5 L/min | - | 0 L | 0 times | 5°C/min | 10 minutes | 30 wt% |

Since the sulfide solid electrolyte powder in each of Examples 1 to 4 is produced using the production method according to the present invention, it is found that the remaining amount on the mesh is small in the powder passage test, and aggregation of the particles is prevented.

On the other hand, since the sulfide solid electrolyte powder in Example 5 is produced without separating the heating area and the cooling area, a large amount of powder remains on the mesh in the powder passage test, and the aggregation of particles is not sufficiently prevented.

Although various embodiments have been described above with reference to the drawings, it is needless to say that the present invention is not limited to such examples. It is obvious for a person skilled in the art that various modifications and variations can be made within the category described in the scope of claims and it is understood that such modifications and variations naturally belong to the technical scope of the present invention. Further, the components described in the above embodiment may be combined in any manner without departing from the spirit of the invention.

The present application is based on a Japanese Patent Application (No. 2023-011197) filed on January 27, 2023, contents of which are incorporated herein by reference.

### REFERENCE SIGNS LIST

10, 40 apparatus for producing sulfide solid electrolyte
11 heating area
12 cooling area
41 heating portion
42 cooling portion
13, 43 container
14, 44 heating unit
15, 45 cooling unit
16, 46 inert gas
17, 47 inert gas containing sulfur gas or the like
18, 48 transferring unit
19, 49 introduction port
20, 50 take-out port
21a, 51a inert gas circulation portion
21b, 51b inert gas circulation portion
22, 52 partition

## Claims

1. A method for producing a sulfide solid electrolyte powder, the method comprising:
mixing raw materials to obtain a raw material mixture;
synthesizing at least one powder of a sulfide powder and a sulfide precursor powder from the raw material mixture;
heat-treating the powder in a heating area to obtain a sulfide solid electrolyte powder;
transferring the sulfide solid electrolyte powder to a cooling area; and
cooling the sulfide solid electrolyte powder while circulating an inert gas in the cooling area,
wherein the heating area and the cooling area are separated.

2. The method for producing a sulfide solid electrolyte powder according to claim 1, wherein in the cooling treatment, an average cooling rate for a temperature of the sulfide solid electrolyte powder to drop from 350°C to 100°C is 5°C/min or more.

3. The method for producing a sulfide solid electrolyte powder according to claim 1 or 2, wherein in the cooling treatment, the inert gas in an amount 50 times or more a volume of the sulfide solid electrolyte powder is circulated through the cooling area until the temperature of the sulfide solid electrolyte powder drops to 100°C.

4. The method for producing a sulfide solid electrolyte powder according to claim 1 or 2, wherein in the cooling treatment, the inert gas in an amount 200 times or more a volume of the sulfide solid electrolyte powder is circulated through the cooling area until the temperature of the sulfide solid electrolyte powder drops to 100°C.

5. The method for producing a sulfide solid electrolyte powder according to claim 1 or 2, wherein in the heat treatment, the powder is heated while an inert gas is circulated in the heating area.

6. The method for producing a sulfide solid electrolyte powder according to claim 1 or 2, wherein the heat treatment, the transfer to the cooling area, and the cooling treatment are continuously performed.

7. An apparatus for producing a sulfide solid electrolyte powder, the apparatus comprising:
a heating portion configured to heat at least one powder of a sulfide powder and a sulfide precursor powder synthesized from a raw material mixture obtained by mixing raw materials;
a cooling portion configured to cool a sulfide solid electrolyte powder obtained by heat-treating the powder in the heating portion; and
an inert gas circulation portion configured to circulate an inert gas through the cooling portion,
wherein the heating portion and the cooling portion are provided separately.

8. The apparatus for producing a sulfide solid electrolyte powder according to claim 7, wherein the heating portion is provided with an inert gas circulation portion for circulating an inert gas.
